**Europäisches Patentamt**

(19) **European Patent Office**

**Office européen des brevets**

(11) Numéro de publication: **0 001 141**

**B1**

(12) **FASCICULE DE BREVET EUROPEEN**

(45) Date de publication du fascicule du brevet: **30.12.81**

(51) Int. Cl.³: **F 16 D  1/08**, F 16 B  3/06, F 16 C  13/00

(21) Numéro de dépôt: **78200159.8**

(22) Date de dépôt: **28.08.78**

(54) **Mode de fixation d'une pluralité de frettes métalliques sur une jante métallique.**

(30) Priorité: **30.08.77 BE  1008351**
**14.12.77 FR  7737598**

(43) Date de publication de la demande:
**21.03.79 Bulletin 79/6**

(45) Mention de la délivrance du brevet:
**30.12.81 Bulletin 81/52**

(84) Etats Contractants Désignés:
**BE CH DE FR GB LU NL SE**

(56) Documents cités:
DE - A - 2 023 316
FR - A - 678 406
FR - A - 977 015
FR - A - 1 241 402
US - A - 1 400 442
US - A - 3 210 104
US - A - 3 805 550
US - A - 3 819 289

(73) Titulaire: **ATELIERS DE CONSTRUCTIONS ELECTRIQUES DE CHARLEROI (ACEC) Société Anonyme**
**54, Chaussée de Charleroi**
**B-1060 Bruxelles (BE)**

(72) Inventeur: **Coppin, Roland**
**Avenue Roi Bauduin**
**B-6419 Marbaix-la Tour (BE)**
Inventeur: **Ghislain, André**
**Rue de Thy-le-Bauduin**
**B-6422 Laneffe (BE)**

(74) Mandataire: **Meunier, Marcel et al,**
**ACEC - Service des Brevets Boîte Postale 4**
**B-6000 Charleroi (BE)**

Courier Press, Leamington Spa, England.

## Mode de fixation d'une pluralité de frettes métalliques
## sur une jante métallique

La présente invention est relative à un mode de fixation d'une pluralité de frettes métalliques sur une jante métallique.

Suivant un mode connu, la fixation d'une frette métallique sur une jante métallique peut se faire à chaud, la frette métallique étant alésée à un diamètre sensiblement égal au diamètre extérieur de la jante, sinon à un diamètre intérieur légèrement inférieur au diamètre extérieur de la jante. On est ainsi assuré d'obtenir un bon entraînement mécanique entre la jante et la frette évitant tout glissement entre les deux éléments. Cette opération ne peut malheureusement s'effectuer qu'à l'aide d'un outillage spécialisé et dans des conditions bien déterminées. Le démontage d'une frette métallique ainsi fixée sur une jante métallique ne peut s'effectuer qu'avec un autre outillage spécialisé. Les opérations de montage et de démontage sont donc non seulement compliquées, mais également onéreuses.

Suivant un autre mode connu, la fixation d'une frette métallique sur une jante métallique, ou sur un arbre, est obtenue par un système doublement tronconique, qui par serrage sur les surfaces inclinées, entraîne une pression circonférentielle sur les surfaces cylindriques du système doublement tronconique.

De tels assemblages à système doublement tronconique sont connus, par exemple, par les brevets US 3 819 289, 3 210 104, US 1 400 442 et 3 893 779.

Dans le brevet FR 678 406, il est décrit un système d'assemblage dans lequel deux frettes adjacentes sont solidarisées par une bague intermédiaire.

Selon la présente invention, il est réalisé un nouveau mode de fixation d'une pluralité de frettes métalliques sur une jante métallique, qui permet un montage et un démontage faciles, quelles que soient les conditions dans lesquelles le montage ou le démontage doivent être réalisés.

Suivant la présente invention, le mode de fixation d'une pluralité de frettes métalliques sur une jante métallique entre deux colliers de serrage, la dite jante métallique étant adaptée pour supporter des charges radiales et ayant une direction principale axiale, chaque frette métallique ayant un diamètre intérieur légèrement supérieur au diamètre extérieur de la dite jante, chacune des dites frettes métalliques ayant deux faces latérales dont une des faces est munie d'un alésage conique coopérant avec un élément annulaire adjacent pourvu d'un épaulement conique, les épaulements et alésages coniques étant de même conicité, est caracterisé en ce que l'autreface latérale de chaque frette est munie d'un épaulement conique, les épaulements et alésages coniques des frettes coopérant directement les uns avec les autres sans bague intermédiaire, les colliers de serrage étant pourvus l'un d'un épaulement conique et l'autre d'un alésage conique de même conicité que les frettes, la dite pluralité de frettes métalliques étant disposée sur la dite jante métallique de telle façon que les dits épaulements coniques sont disposés dans la même direction axiale de la dite jante métallique, le collier de serrage pourvu d'un épaulement conique étant disposé dans la même direction axiale que les épaulement coniques des dites frettes métalliques et l'autre collier de serrage muni d'un alésage conique étant disposé dans la même direction axiale que les alésages coniques des dites frettes métalliques, les dits colliers de serrage comprenant en outre des moyens pour fixer les dits colliers sur la dite jante métallique et pour les serrer axialement contre la dite pluralité de frettes métalliques.

Les caractéristiques de l'invention apparaîtront dans la description qui va suivre d'un exemple de mise en oeuvre de la présente invention.

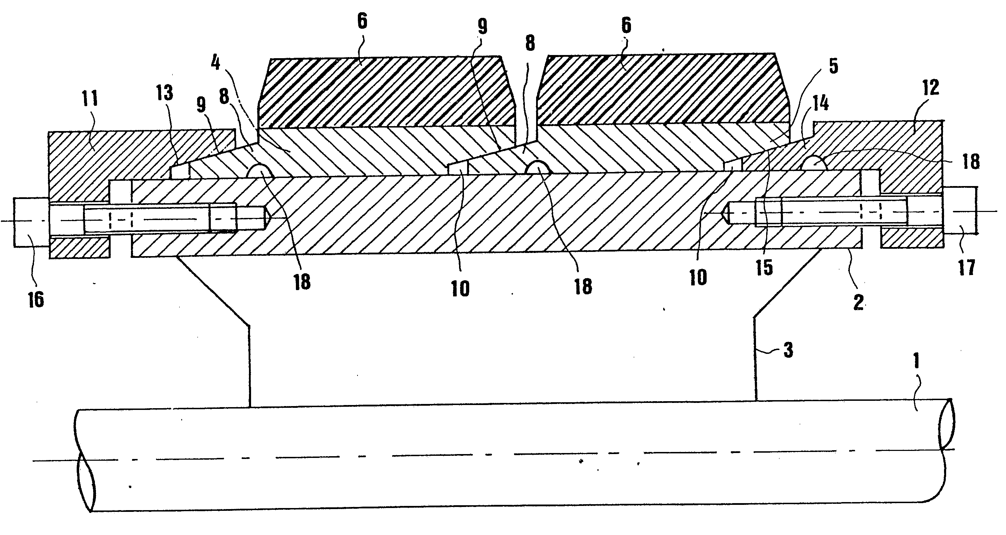

Le dessin annexé représente le mode de fixation de deux frettes métalliques sur une jante métallique, chacune des frettes présentant un épaulement conique et un alésage conique.

En référence à ce dessin, 1 désigne un arbre qui support une jante métallique 2 par l'intermédiaire de rayons 3. Deux frettes métalliques 4 et 5, toutes deux porteuses d'un bandage élastique 6, sont destinées à être fixées sur la jante 2.

Chacune des frettes 4 et 5 est munie, sur l'une des faces latérales, d'un épaulement 8 dont la surface extérieure forme un cône 9. Dans l'autre face latérale des frettes 4 et 5, on ménage un alésage conique 10, dont l'inclinaison, par rapport à la surface extérieure de la jante 2, est identique à celle des cônes 9.

La jante 2 est munie à ses deux extrémités de deux bagues de serrage 11 et 12. Dans la bague 11, on a ménagé un alésage conique 13 dont l'inclinaison est identique à celle du cône 9 de l'épaulement 8 de la frette 4.

A l'autre extrémité de la jante 2, la bague de serrage 12 est munie d'un épaulement 14 dont la surface extérieure forme un cône 15 dont l'inclinaison est identique à celle de l'alésage 10 de la frette 5.

Les différentes pièces de l'assemblage étant disposées comme il est indiqué sur le dessin, on voit facilement qu'en agissant sur les vis de serrage 16 et 17, on mettra d'abord en contact les parties coniques 9 et 15 en contact avec les alésages 10 et 13. Une augmentation du serrage, par l'action des surfaces coniques concurrentes des frettes entre'elles, ou des frettes et des bagues, aura pour conséquence une déformation des épaulements 8 et 14, ce qui aura pour effet de les appliquer fortement sur la surface extérieure de la jante 2 et d'assurer ainsi la transmission des efforts mécaniques sans glissement entre la jante 2 et les frettes 4 et 5, tout en tolérant un certain jeu entre la surface extérieure de la jante 2 et la surface intérieure des frettes 4 et 5.

Il est facile de se rendre compte que l'on peut obtenir de la sorte un mode de montage extrêmement facile et sûr, ne demandent pas d'outillage spécial; de même, la simplicité de ce nouveau mode de fixation permet un démontage rapide de l'ensemble.

Pour augmenter la flexibilité des épaulements dont sont munies les frettes ou les bagues de serrages, on peut prévoir dans celles-ci, à la base de l'épaulement, une rainure annulaire intérieure.

Une telle rainure circulaire intérieure a été représentée dans le dessin annexé sous la référence 18.

## Revendication

Mode de fixation d'une pluralité de frettes métalliques (4, 5) sur une jante métallique (2) entre deux colliers de serrage (11, 12), la dite jante métallique étant adaptée pour supporter des charges radiales et ayant une direction principale axiale, chaque frette métallique ayant un diamètre intérieur légèrement supérieur au diamètre extérieur de la dite jante, chacune des dites frettes métalliques ayant deux faces latérales dont une des faces est munie d'un alésage conique (9) coopérant avec un élément annulaire adjacent pourvu d'un épaulement conique (8), les épaulements et alésages coniques étant de même conicité, est caractérisé en ce que l'autreface latérale de chaque frette (4, 5) est munie d'un épaulement conique (8), les épaulements et alésages coniques des frettes coopérant directement les uns avec les autres sans bague intermédiaire, les colliers de serrage étant pourvus l'un d'un épaulement conique (14) et l'autre d'un alésage conique (13) de même conicité que les frettes, la dite pluralité de frettes métalliques étant disposée sur la dite jante métallique de telle façon que les dits épaulements coniques sont disposés dans la même direction axiale de la dite jante métallique, le collier de serrage (12) pourvu d'un épaulement conique étant disposé dans la même direction axiale que les épaulement coniques des dites frettes métalliques et l'autre collier de serrage (11) muni d'un alésage conique étant disposé dans la même direction axiale que les alésages coniques des dites frettes métalliques, les dits colliers de serrage comprenant en outre des moyens (16, 17) pour fixer les dits colliers sur la dite jante métallique et pour les serrer axialement contre la dite pluralité de frettes métalliques.

## Claim

Method of fixing a plurality of metallic hoops (4, 5) on a metallic rim (2) between two clamping collars (11, 12), said metallic rim being designed to withstand radial loads and having an axial main direction, each metallic hoop having an inside diameter slightly greater than the outside diameter of said rim, each of said metallic hoops having two lateral faces, one of which is equipped with a conical bore (9) interacting with an adjacent annular element provided with a conical shoulder (8), the conical shoulders and bores having the same conicity, characterised in that the other lateral face of each hoop (4, 5) is equipped with a conical shoulder (8), the conical shoulders and bores of the hoops interacting directly with one another without an intermediate ring, the clamping collars being provided one with a conical shoulder (14) and the other with a conical bore (13) of the same conicity as the hoops, said plurality of metallic hoops being arranged on said metallic rim in such a way that said conical shoulders are arranged in the same axial direction of said metallic rim, the clamping collar (12) provided with a conical shoulder being arranged in the same axial direction as the conical shoulders of said metallic hoops, and the other clamping collar (11) equipped with a conical bore being arranged in the same axial direction as the conical bores of said metallic hoops, said clamping collars also possessing means (16, 17) for fixing said collars on said metallic rim and for clamping these axially against said plurality of metallic hoops.

## Patentanspruch

Befestigung einer Mehrzahl von Metallummantelungen (4, 5) auf einer Metallnabe (2) zwischen zwei Klemmschellen (11, 12), wobei die Metallnabe zur Aufnahme von radialen Lasten ausgebildet ist und eine axiale Hauptrichtung aufweist, wobei jede Metallummantelung einen Innendurchmesser aufweist, der etwas größer ist als der Außendurchmesser der Nabe, wobei jede der Metallummantelungen zwei Seitenflächen aufweist, wovon die eine mit einer konischen Bohrung (9) versehen ist, die mit einem ringförmigen, daran angrenzenden Element zusammenwirkt, das eine konische Schulter (8) aufweist, wobei die konischen Schultern und Bohrungen dieselbe Konizität aufweisen, dadurch gekennzeichnet, daß die andere Seitenfläche jeder Ummantelung (4, 5) mit einer konischen Schulter (8) versehen ist, die konischen Schultern und Bohrungen der Ummantelungen direkt ohne dazwischen angeordneten Ring miteinander zusammenwirken, von den Klemmschellen die eine mit einer konischen Schulter (14) und die andere mit einer konischen Bohrung (13) derselben Konizität wie die Ummantelungen versehen ist, die genannte Mehrzahl von Metallummantelungen auf der Metallnabe derart angeordnet ist, daß die konischen Schultern in derselben Axialrichtung der Metallnabe angeordnet sind, die mit einer konischen Schulter versehene Klemmschelle (12) in derselben Axialrichtung wie die konischen Schultern der Metallummantelungen angeordnet ist und die andere Klemmschelle (11), die mit einer konischen Bohrung versehen ist, in derselben Axialrichtung angeordnet ist wie die konischen Bohrungen der Metallummantelungen, und die genannten Klemmschellen ferner Mittel (16, 17) umfassen, um die Schellen an der Metallnabe zu befestigen und sie axial gegen die genannte Mehrzahl von Metallummantelungen anzuspannen.